# EUROPEAN PATENT APPLICATION

(11) **EP 4 179 928 A1**
(43) Date of publication of application: **17.05.2023**
(21) Application number: 21837236.5
(22) Date of filing: 24.06.2021
(51) Int. Cl.: A47J 31/44, A47J 31/34

(54) **PORTAFILTER CAPABLE OF SENSING DATA IN COFFEE EXTRACTION PROCESS AND METHOD FOR CONTROLLING COFFEE EXTRACTION PROCESS BY USING SAME**

(30) Priority: 09.07.2020 KR 20200085002; 09.07.2020 KR 20210047176
(71) Applicant: Park, Sang Yup, Seoul 06680 (KR)
(72) Inventor: PARK, Sang Hyung, Seoul 06703 (KR); PARK, Sang Yup, Seoul 06680 (KR)
(74) Representative: dompatent von Kreisler Selting Werner - Partnerschaft von Patent- und Rechtsanwälten mbB
(86) International application number: PCT/KR2021/007989
(87) International publication number: WO 2022/010141

(57) **Abstract**

The present invention relates to a portafilter capable of sensing data in a coffee extraction process and a method for controlling a coffee extraction process using the same, the portafilter comprising: a portafilter head capable of accommodating a basket; at least one sensor formed on the portafilter head; a communication unit; and a control unit, wherein the control unit may be configured to transmit sensing data sensed through the one or more sensors to an external electronic device through the communication unit.

## Description

### Technical field

The present invention relates to a portafilter capable of sensing a coffee extraction process and a method for controlling the coffee extraction process using the same and, more specifically, to a method for improving the quality of coffee taste and maintaining a constant taste by providing a portafilter including one or more sensors and a communication unit to measure the temperature, pressure, and concentration in the coffee extraction process and controlling the coffee extraction process based on the temperature, pressure, and concentration data sensed by the portafilter.

### Background technology of the invention

In modern society, people live by eating and drinking a variety of food and beverages, and coffee is one of the beverages that many people prefer and enjoy.

There are various types of coffee, such as espresso, Americano, cappuccino, latte, and machiato, and among them, espresso refers to liquid coffee extracted by applying heat and pressure by passing heated water through coffee powder.

The device for extracting the espresso was first developed in 1906, and is generally designed to extract about 25 to 30 mℓ of coffee in 20 to 30 seconds at a pressure of about 9 atmospheres and at a temperature of about 90-100° C.

The espresso extraction device comprises: a container for containing coffee powder, that is, a portafilter; a boiler for heating water; and a pump for pressurizing hot water, which has been heated to a predetermined temperature by the boiler, at a predetermined pressure, and supplying the pressurized high-temperature water to the portafilter.

The method of the present invention can extract espresso coffee having a unique taste and aroma by putting the roasted and ground coffee powder in a basket within the portafilter, and passing the pressurized high-temperature water through the basket. In this case, the taste and flavor of the espresso coffee are also affected by the thickness and amount of the coffee beans, and the roasting and grinding degrees, but the pressure and temperature, the extraction time, and the concentration of the espresso extracted during the extraction process have the greatest influence.

Therefore, in order to uniformly extract a high-quality espresso having good taste and flavor, pressure, temperature, amount of water, extraction time, concentration, and the like, should be very closely controlled, and as described above, since the espresso extraction process has various variables described above, a technology of a predetermined level or more is required to extract an espresso. Furthermore, in order to improve its quality to a high level, it is necessary to accumulate considerable experience.

However, most people who operate a cafe or a coffee shop or extract coffee from a house or an office have difficulty in maintaining a predetermined taste of coffee or improving the quality of coffee because they do not have skills, and furthermore, a method of hiring a professional barista to solve this problem is not realized due to high labor costs and the like, and thus face practical problems.

Therefore, there is a demand for a specific method for solving the above problems.

### Detailed description of the invention

### Technical problems

The present invention has been made in an effort to provide a method for measuring pressure, temperature, and concentration at a moment when water passes through coffee powder contained in a portafilter basket and coffee is extracted.

Another aspect of the present invention is to provide a method for improving the quality of coffee flavor and maintaining a predetermined taste by setting and controlling an environment and conditions for extracting coffee based on measured pressure, temperature, and concentration data.

Another aspect of the present invention is to provide a portafilter apparatus including one or more sensors and communication units for the above-described method.

### Technical solving method

According to an aspect of the present disclosure, there is provided a portafilter including a portafilter head capable of accommodating a basket, at least one sensor formed in the portafilter head, a communication unit, and a control unit, wherein the control unit transmits sensing data sensed through the at least one sensor to an external electronic device through the communication unit.

In the portafilter according to an embodiment of the present disclosure, the portafilter may further include a handle, and the control unit and the communication unit may be positioned in an empty space formed in the handle connected to the portafilter head.

The at least one sensor may include at least one of a temperature sensor, a pressure sensor, and a concentration sensor.

In the portafilter according to an embodiment of the present disclosure, the portafilter may further include a battery unit configured to drive the control unit, the one or more sensors, and the communication unit, and the battery unit may be located in an empty space formed in a handle connected to the portafilter head.

The portafilter according to one embodiment of the present invention further comprises a connection unit formed so as to extend in a lengthwise direction on one side of the portafilter head, wherein the portafilter head and the handle are connected through the connection unit, holes are formed in one side of the inner wall surface of the portafilter head, the center part of the connection unit, and the center part of one side of the handle, respectively, and the holes can be connected to each other.

In the portafilter according to an embodiment of the present disclosure, the one or more sensing data transmitted to the external electronic device may be displayed on a screen of the external electronic device, and the display may include a change in the one or more sensing data over time.

In the portafilter according to an embodiment of the present disclosure, the one or more sensing data transmitted to the external electronic device may be stored in the external electronic device to establish a database.

A method for controlling a coffee extraction process according to an embodiment of the present invention may include: a step in which the external electronic device generates a guide based on sensing data sensed through one or more sensors included in a portafilter; and a step of displaying the generated guide to a user.

The method of controlling a coffee extraction process according to an embodiment of the present disclosure may further include generating, by the external electronic device, a signal for controlling a coffee machine to which the portafilter is coupled based on the sensing data and transmitting the signal to the coffee machine.

### Effects of the invention

According to the present invention, provided is a method for measuring the pressure, temperature, and concentration at the moment when coffee is extracted while water passes through the coffee powder contained in the portafilter basket.

According to the present invention, provided is a method for improving the quality of coffee taste and maintaining a constant taste by setting and controlling the environment and conditions for extracting coffee based on measured pressure, temperature, and concentration data.

According to the present invention, it is to provide a portafilter device including one or more sensors and communication units for the above method. According to the present invention, there are the above effects, but the effects provided by the present invention are not limited by the following effects.

### Brief description of drawings

FIG. 1 is a view illustrating a portafilter used for extracting coffee.
FIG. 2 is a view illustrating a portafilter according to an embodiment of the present disclosure.
FIG. 3 is a view illustrating the portafilter basket, the sensor attached thereto, and the fixing clip according to the embodiment of the present invention.
FIG. 4 is a view illustrating the portafilter basket and a sensor attached to the outside according to an embodiment of the present invention.
FIG. 5 is a view illustrating a porch filter basket and a sensor attached to the outside according to another embodiment of the present invention.
FIG. 6 is a view illustrating a probe and a sensor formed on the porch filter basket and a lower surface thereof according to another embodiment of the present invention.
FIG. 7 is a view for explaining a need and a method for removing an influence of a strain gauge value and a portafilter basket due to a temperature according to an embodiment of the present disclosure.
FIG. 8 is a diagram illustrating an example in which an espresso machine, a portafilter, a measurement sensor, and external electronic devices, which constitute a system for controlling a coffee extraction process, transmit and receive data to and from each other, according to an embodiment of the present invention.
FIG. 9 is a diagram illustrating an example of an external electronic device according to an embodiment of the present invention.
FIG. 10 is a view illustrating a hole formed in a connection unit and a handle according to an embodiment of the present invention.
FIG. 11 is another view illustrating a hole formed in a connection unit and a handle according to an embodiment of the present invention.
FIG. 12 is a diagram illustrating a system for controlling a coffee extraction process according to an embodiment of the present invention.
FIG. 13 is another diagram illustrating a system for controlling a coffee extraction process according to an embodiment of the present invention.

### Embodiments for the practice of the invention

Since the present invention may be modified in various ways and have various embodiments, specific embodiments will be illustrated in the drawings and described in detail. However, this is not intended to limit the present invention to specific embodiments, and it should be understood that the present invention includes all modifications, equivalents, and replacements included within the idea and technical scope of the present invention. In describing each of the drawings, similar reference numerals are used for similar components.

It will be understood that, although the terms first, second, A, B, etc. may be used herein to describe various elements, these elements should not be limited by these terms. The terms are used only for the purpose of distinguishing one component from another component. For example, a first element could be termed a second element, and similarly, a second element could be termed a first element, without departing from the scope of the present invention. The term "and/or" includes a combination of a plurality of related described items or any of a plurality of related described items.

When it is mentioned that a component is "connected" or "linked" to another component, the component may be directly connected or linked to the other component, but it should be understood that another component may exist therebetween. On the other hand, when it is mentioned that a component is "directly connected" or "directly linked" to another component, it should be understood that another component does not exist therebetween.

The terminology used herein is for the purpose of describing particular embodiments only and is not intended to be limiting of the present disclosure. A singular expression includes a plural expression unless the context clearly indicates otherwise. In the present application, it should be understood that the term "include" or "have" indicates that a feature, a number, a step, an operation, a component, a part, or a combination thereof described in the specification is present, but does not exclude the possibility of presence or addition of one or more other features, numbers, steps, operations, components, parts, or combinations thereof in advance.

Unless otherwise defined, all terms used herein, including technical or scientific terms, have the same meaning as that generally understood by those skilled in the art to which the present invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present invention will be described in more detail with reference to the accompanying drawings. In describing the present invention, in order to facilitate overall understanding, the same reference numerals are used for the same elements in the drawings, and redundant descriptions of the same elements will be omitted.

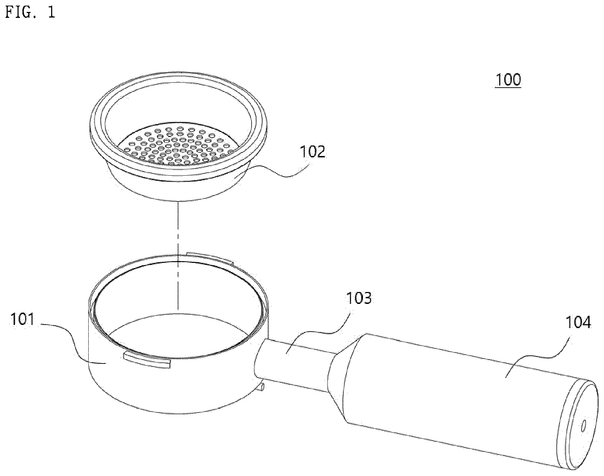

FIG. 1 is a view illustrating a portafilter 100 used for extracting coffee. Referring to FIG. 1, the portafilter 100 may include a portafilter head 101, a portafilter basket 102, a portafilter connection unit 103, and a portafilter handle 104, and hereinafter, for convenience of description, the terms "head," "basket," "connection unit," and "handle" will be used.

The head 101 has a circular frame shape in which upper and lower units thereof communicate with each other so as to accommodate the basket 102. The basket 102 may be detached from the head 101, and specifically, the basket 102 may be coupled to an area in which the upper unit and the lower unit of the head 101 communicate with each other by pushing the basket 102 from the upper unit of the head in a downward direction, and on the contrary, the basket 102 may be detached from the head 101 according to a method of pulling up the pushed basket 102 in an upward direction.

In this case, when the basket 102 is coupled to the head 101, in order to maintain a coupled state of the basket 102, a holding unit may be formed on an outer circumferential surface of an upper unit of the head 101 in a shape surrounding the entire outer circumferential surface so that the basket 102 may be closely fixed thereto. The mounting unit may be formed in a grooved shape unlike the above.

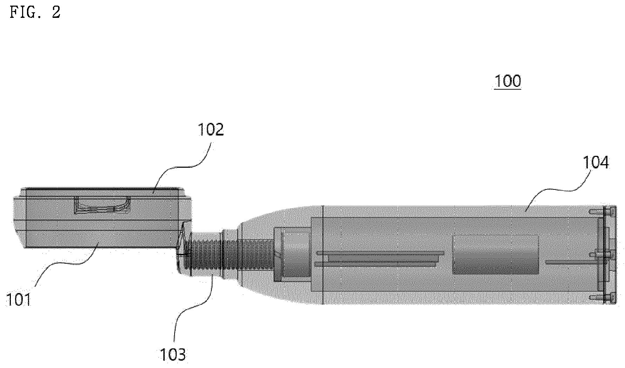

Meanwhile, the head 101 may be provided with a connection unit 103 at one side of the head 101 so as to connect the handle 104, which is another component of the portafilter 100, and in detail, as illustrated in FIGS. 1 and 2, the head 101 may be formed to protrude in a length direction at one region thereof.

In this case, the connection unit 103 may have a bolt (for example, a hexagonal bolt, a dish head bolt, etc.) or a groove in comparison with the bolt in order to be connected to the handle 104.

The handle 104 refers to a unit for gripping the portafilter 100 when a user desires to use the portafilter, and may be coupled to the head 101 through the connection unit 103, and specifically, as mentioned above, a bolt or a groove in contrast to the bolt may be formed on one side.

For example, as shown in FIG. 2, when a bolt is formed at one side of the handle 104, a groove may be formed in the connection unit 103 in contrast to the bolt, and vice versa. In this case, when the bolt and the groove are brought into contact with each other and then rotated in a predetermined direction (for example, a clockwise direction), the handle 104 and the head 101 may be fixed through the connection unit 103, and when the bolt and the groove are rotated in the opposite direction (for example, a counterclockwise direction), the aforementioned fixing may be released.

Meanwhile, referring back to FIG. 1, the basket 102, which can be attached to or detached from the portafilter head 101, has a space having a predetermined size formed therein so as to contain coffee powder and allow water to pass therethrough, and a plurality of perforations are formed on the bottom surface thereof.

The diameter of the basket 102 may be various, such as 56mm, 58mm, and the like, and although 58mm is mainly used, the present invention is not limited thereto. In addition, since the shape of the wall of the basket 102 or the capacity of the basket 102 to contain coffee may be different for each product, the shape of the wall of the basket 102 or the capacity of the coffee are not particularly limited in the present invention.

Meanwhile, as described above, coffee has a great difference in taste and flavor even with a slight difference in the extraction process, and as a result, only an expert who has accumulated considerable experience can maintain the coffee taste constant or improve the coffee taste to a high level.

However, most people do not have skills, and hiring a professional barista cannot be a realistic direction for improvement due to problems such as high labor costs.

Therefore, in order to generalize the above improvement directions, it is necessary to implement expert's experience knowledge by technology, and specifically, it is necessary to directly measure the physicochemical change at the moment when water passes through the coffee powder in the basket 102 within the portafilter, and to confirm what effect has on the taste and aroma of coffee by accumulating and analyzing the measured data.

Accordingly, according to an embodiment of the present invention, the basket 102 detachable from the portafilter head 101 may include at least one sensor for sensing various states.

Hereinafter, for convenience of description, the basket 102 is described as including a temperature sensor, a pressure sensor, and a concentration sensor, but the present invention is not limited thereto, and various sensors which have been developed or will be developed in the future may be combined.

In addition, hereinafter, it is assumed that the temperature sensor, the pressure sensor, and the concentration sensor are separately located in the inside, the outside, and the lower surface of the basket 102, but this is for convenience of description, and the types and positions of the sensors may be changed or may be formed at the same position.

First, a temperature sensor may be coupled to the basket 102, and the temperature sensor is for measuring an instantaneous temperature at a moment when the water passes through the coffee powder when high-temperature water (hereinafter, referred to as water) pressurized at a predetermined pressure after being heated at a preset temperature in a boiler in a coffee machine is applied to the basket 102.

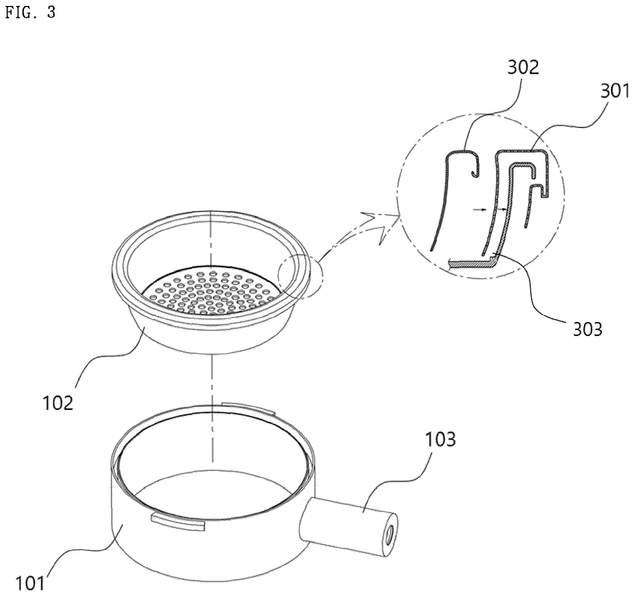

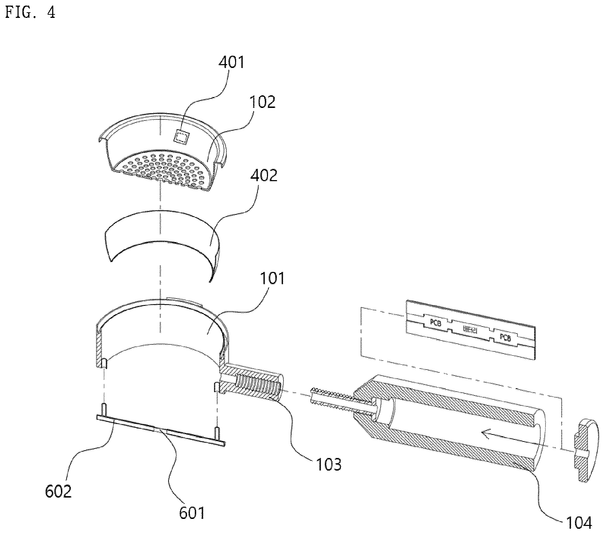

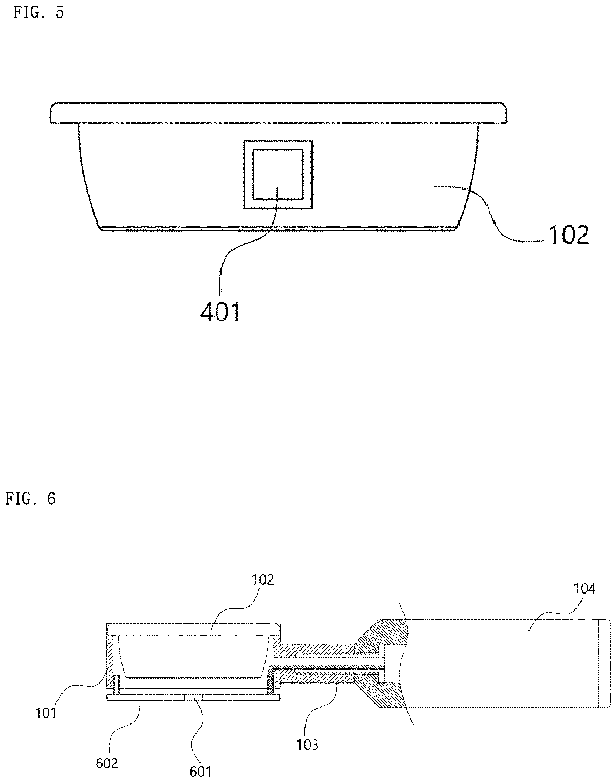

In this case, the sensor may be positioned inside the basket 102 as illustrated in FIG. 3, or may be positioned on the outer surface of the basket 102 as illustrated in FIGS. 4 and 5 or on the bottom surface of the basket through which coffee passing through the coffee powder is discharged as illustrated in FIG. 6. However, since the temperature sensor 301 is for measuring an instantaneous temperature at a moment when water passes through the coffee powder, it may be preferable in terms of accuracy to be positioned in the basket 102.

However, when the sensor is positioned inside the basket 102, the sensor may directly contact water in the process of measuring the temperature of the water, the water is heated to a high temperature (about 100° C), and a high pressure (about 9 bar) is applied to the water, and thus the sensor may be corroded or broken.

Therefore, according to an embodiment of the present invention, the temperature sensor may be a sensor that operates correctly up to a predetermined temperature limit (for example, 120° C.), and furthermore, as illustrated in FIG. 3, the sensor may be a film-type temperature sensor 301 that can be attached to/detached from the wall (or floor) inside the basket.

In this case, when the film-type temperature sensor 301 is attached to the inner wall surface of the basket 102, a fixing clip 302 may be additionally coupled as illustrated in FIG. 3 in order to limit and fix movement of the film-type temperature sensor 301 and to minimize influence (sensor damage, sensor failure, sensing error, inaccurate sensing, etc.) due to external factors.

That is, the fixing clip 302 may cover the film-type temperature sensor 301 attached to the wall surface of the basket 102 and may be formed in a shape as illustrated in FIG. 3 so as to be hooked and fixed to the outer circumferential surface of the basket 102.

Therefore, when the length of the film-type temperature sensor 301 is longer than the inner wall surface of the basket 102, the film-type temperature sensor 301 may be moved over to the outer wall surface of the basket 102, and since the fixing clip 302 is formed to cover the film-type temperature sensor 301, the fixing clip 302 may limit and fix the movement of the film-type temperature sensor 301, and as described above, influence (sensor damage, sensor failure, sensing error, inaccurate sensing, etc.) due to external factors may be minimized.

Meanwhile, the espresso may be an extract from water passing through the basket containing the coffee powder, and in this case, the taste and flavor of the espresso may also be influenced by the flow of water through the basket 102 containing the coffee powder.

For example, when water is evenly passed through the basket 102 containing the coffee powder, coffee having good taste and flavor may be extracted, and when there is a factor that disturbs the flow of water in a predetermined area, water may pass through the basket 102 while being in contact with only a part of the coffee powder, and thus, the taste and flavor of coffee may be changed.

As described above, when the film-type temperature sensor 301 is attached to the inner wall surface of the basket 102 in order to measure the temperature at the moment when the water passes through the coffee powder and the fixing clip 302 is additionally coupled, since the convex protruding obstacle is formed on the inner wall surface of the basket 102 from the viewpoint of the water, this may be a factor that obstructs the flow of the water passing through the coffee powder in the basket 102.

Therefore, according to an embodiment of the present invention, one area of the inner wall surface of the basket 102, in detail, all or a partial area of the inner wall surface of the basket 102 to which the film-type temperature sensor 301 and/or the fixing clip 302 are attached/coupled may form a recessed space 303 having a predetermined thickness (for example, 0.3mm) as illustrated in FIG. 3.

In this case, the thickness of the recessed space 303 may be designed to correspond to the thickness of the combination of the film-type temperature sensor 301 and the fixing clip 302, and when the thickness of the combination of the film-type temperature sensor 301 and the fixing clip 302 is 0.3mm, the thickness of the recessed space 303 formed in one area of the inner wall surface of the basket 102 may also be 0.3mm.

When the inner wall surface of the basket 102 is formed to have the recessed space 303 as described above, if the film-type temperature sensor 301 and the fixing clip 302 are attached/coupled to the recessed space 303, the inner wall surface of the basket 102 may be formed to have an even surface without an obstacle in the entire area thereof even though the film-type temperature sensor 301 and the fixing clip 302 are attached/coupled to each other, thereby removing an obstacle to the flow of water passing through the coffee powder in the basket 102.

Meanwhile, the fixing clip 302 may be hooked and fixed to the outer circumferential surface of the basket 301, in which case a unit of the fixing clip 302 may protrude outward from the outer circumferential surface of the basket 301, and a unit of the protruding fixing clip 302 may be fitted and coupled to an outer circumferential surface of the head 101 or a groove (not shown) formed on the outer circumferential surface of the head 101 to serve to fix the basket 102 so as not to be moved left and right in a state in which it is coupled to the head 101. In addition, as described above, the basket 102 may be coupled to or separated from the head 101, and in a coffee extraction process, shaking or impact may be applied in a state in which the basket 102 is coupled to the head 101. However, when the basket 102 is unexpectedly separated from the head 101 due to the absence of a separate fixing unit or a separate fixing member, the basket 102 may be moved away from the head 101. According to the present invention, the fixing clip 302 may be hooked and fixed to the outer circumferential surface of the basket 102, and in this case, since a unit of the fixing clip 302 protrudes outward from the outer circumferential surface of the basket 102, a unit of the protruding fixing clip 302 may be inserted into and coupled to the outer circumferential surface of the head 101 or the groove formed on the outer circumferential surface of the head 101, thereby providing an effect in which the basket 102 is not separated from the basket 102 in a state of being coupled to the head 101 or does not move left and right.

Meanwhile, referring to FIGS. 4 and 5, according to an embodiment of the present invention, a pressure sensor 401 may be coupled to the basket 102, and the pressure sensor 401 is configured to measure a pressure at a moment when the water passes through the coffee powder when high-temperature water (hereinafter, referred to as water) pressurized at a predetermined pressure after being heated at a predetermined temperature in the boiler for heating the water is applied to the basket 102.

The pressure sensor 401 is for measuring the pressure applied when the water passes through the coffee powder, and when the pressure sensor 401 is positioned inside the basket 102, the water directly contacts the sensor during the measurement process, the water is heated to a high temperature (about 100° C.), and a high pressure (about 9 bar) is applied thereto, such that there may be a problem in that the pressure sensor 401 is corroded or broken.

For this reason, the pressure sensor 401 may be positioned on the outer surface of the basket 102, but since the pressure sensor 401 can be measured only when pressure is directly transmitted to the sensing unit, there is still a problem in that the pressure applied at the moment when water passes through the coffee powder in the basket 102 must be measured in the basket 102 to be accurately measured.

Therefore, according to an embodiment of the present invention, the pressure sensor 401 may be coupled/attached to the outer surface of the basket 102 as illustrated in FIG. 4, and the pressure sensor 401 may be a film-type pressure sensor that is attachable/detachable to/from the outer wall surface of the basket 102 like the temperature sensor 401 described above.

In addition, the pressure sensor 401 may be a strain gauge that measures a degree of deformation of an object when the object is deformed by an external force and represents the degree of deformation as an electrical signal.

Therefore, according to an embodiment of the present invention, the strain gauge may be coupled/attached as an example of the pressure sensor 401 to the outer surface of the basket 102. In this case, when water passes through the coffee powder in the basket 102, the outer shape of the basket 102 may be deformed (for example, an increase, a length change, or the like) due to the pressure applied to the inside of the basket 102, and the strain gauge coupled to the outer surface of the basket 102 may quantify and measure the deformation occurring in the outer shape of the basket 102.

In this case, the pressure applied to the inside of the basket 102 may be measured by comparing a state before the external shape of the basket 102 is deformed and a state after the external shape is deformed.

Meanwhile, the strain gauge is an example of an analog sensor, and the analog sensor generates an analog electrical signal under the influence of a physical quantity to be measured.

However, since the analog electrical signal provided by the analog sensor is not a physical quantity to be measured through the sensor itself, it is necessary to estimate the physical quantity to be measured by analyzing the analog electrical signal generated by the influence of the physical quantity.

However, in the above process, there may be a case in which a physical quantity other than the physical quantity to be measured is affected, and in this case, since the physical quantity to be measured may be estimated by excluding the influence of the other physical quantity from the generated analog electrical signal, it is necessary to consider an algorithm for excluding the influence of the other physical quantity when the other physical quantity is affected.

As described above, even in the present invention, when water passes through the coffee powder in the basket 102, the outer shape of the basket 102 is deformed due to the pressure applied to the inside of the basket 102, and the strain gauge coupled to the outer surface of the basket 102 may measure the deformation occurring in the outer shape of the basket 102, and in this case, the strain gauge may also be affected by the temperature change as well as the outer shape deformation of the basket 102 due to the pressure, and this is because the strain gauge is an electric resistor having a low resistance and is also affected by the temperature.

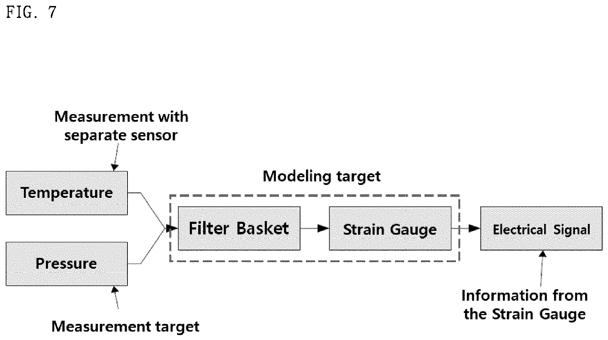

Therefore, in the present invention, in order to measure the deformation occurring in the outer shape of the basket 102 through the strain gauge and further, in order to accurately measure the pressure applied to the inside of the basket 102, it is necessary to remove the influence of the strain gauge caused by the temperature as illustrated in FIG. 7.

To this end, it is necessary to check how the strain gauge reflects the temperature and pressure applied to the inside of the basket 102 to generate a measurement result (for example, an analog electrical signal), and further, when the measurement result (for example, an analog electrical signal) generated by reflecting only the temperature is separately collected and then used or only temperature information is separately collected and used, the influence of the strain gauge due to the temperature may be removed, and the measurement result (for example, an analog electrical signal) of the strain gauge generated by reflecting only the pressure may be derived.

In addition, in order to increase the accuracy of the measurement result, a database or big data may be constructed by repeating the above process and then used, and through this, a measurement model for how the strain gauge reflects the temperature and pressure applied to the inside of the basket to generate the measurement result (for example, an analog electrical signal) may be constructed. In addition, a plurality of measurement models may be fused through fuzzy logic. As described above, when the measurement model is constructed based on the data and the pressure is derived based on the constructed measurement model, the pressure applied at the moment when the water passes through the coffee powder in the basket 102 may be more accurately measured.

Meanwhile, according to an embodiment of the present invention, as illustrated in FIG. 4 or 5, when the pressure sensor (or strain gauge) is coupled/attached to the outer surface of the basket 102, a housing 402 having a shape surrounding the outer surface of the basket may be formed in order to prevent water or a user's hand from being in contact with the housing and to improve protection and durability of the sensor.

In this case, the housing 402 may be formed of a stainless material having a predetermined thickness (for example, 0.2mm, or the like) and may be further sealed with a silicone material for waterproofing and impact prevention, but the thickness and the material are only examples and are not limited thereto.

The housing 402 may be worn to surround the outer surface of the basket 102, and in this case, the housing 402 may entirely cover the sensor 401 coupled/attached to the outer surface of the basket 102, thereby protecting and improving durability of the sensor 401 coupled/attached to the outer surface of the basket 102. As another example, after the sensor 401 is coupled/attached to the inside of the housing 402, the housing 402 to which the sensor 401 is coupled/attached may be fitted to surround the outer surface of the basket 102.

Meanwhile, referring to FIG. 6, according to an exemplary embodiment of the present invention, a concentration sensor 601 may be coupled to the basket 102, and the concentration sensor 601 measures an instant concentration of the drawn instant liquid (for example, espresso) in a process in which water is introduced into the basket 102, passes through coffee powder, and is then drawn out of the basket 102.

Since the concentration sensor 601 is for measuring the instantaneous concentration of the liquid at the moment when the water passes through the coffee powder and then is drawn out of the basket 102, it is necessary to be positioned on the outer bottom surface of the basket 102, but if the concentration sensor 601 is directly in contact with the outer bottom surface of the basket 102 and attached/positioned, the flow of the drawn liquid may be disturbed and water may be directly in contact with the concentration sensor 601, such that the sensor may be corroded or broken.

Accordingly, for the above reasons, in the present disclosure, as illustrated in FIG. 6, the probe 602 may be connected to and fixed to one end and/or the other end of the outer bottom surface of the basket 102 and formed to be spaced apart from the outer bottom surface of the basket 102 by a predetermined interval.

In this case, the probe 602 may be formed in a shape of two parallel bars, but is not limited thereto, and for example, may be formed in a shape of one or more bars, or may be formed in a shape in which the one bar is connected to only one of one end or the other end of the outer bottom surface of the basket 102. That is, the shape of the probe 602 is not limited, and any shape may be used as long as the probe 602 is fixed to the outer bottom surface of the basket 102 while being spaced apart from the outer bottom surface by a predetermined interval.

In order to fix the probe 602, at least one area to which one end or both ends of the probe 602 may be fixedly coupled may be formed at one end and/or the other end of the outer bottom surface of the basket 102.

In addition, a concentration sensor 601 may be attached/positioned to the probe 602, and in the present invention, in order to accurately measure the instantaneous concentration of the liquid at the moment drawn to the outside of the basket 102, the concentration sensor 601 may be attached/positioned on the probe 601 while facing the center of the outer lower surface of the basket 102.

Meanwhile, the concentration of the liquid (e.g., espresso) drawn out of the basket 102 may be felt as a heaviness when the liquid is consumed.

However, unlike the conventional concentration of the liquid drawn to the outside, the instantaneous concentration of the liquid measured at the moment when water is drawn to the outside of the basket 102 in the process of extracting coffee may be an important index showing how much components contained in the coffee are extracted.

Therefore, when the instantaneous concentration of the liquid may be measured or collected as data (for example, log data, etc.) at the moment when the liquid is drawn out of the basket 102, a lot of bad miscellaneous goods may be produced in the latter half of the extraction, and thus the extraction may be stopped immediately before the latter half of the extraction based on the instantaneous concentration, thereby improving or maintaining the level of taste.

In addition, the present invention can save costs by allowing extraction to be maximally performed until just before reaching a second half of extraction in which the miscellaneous taste comes out based on said instantaneous concentration, since good ingredients remaining in the coffee powder can be wasted if extraction is stopped too quickly.

To this end, as illustrated in FIG. 6, the concentration sensor 601 is attached/positioned on the probe 602 while facing the center of the outer bottom surface of the basket 102, and the instantaneous concentration of the liquid is measured at the moment when the water is drawn out of the basket 102.

In this case, the concentration sensor 601 may be a total dissovel solid (TDS) for measuring the concentration of the solid dissolved in water, but is not limited thereto.

Among the methods of measuring the concentration by using the concentration sensor 601, the optical method and the chemical method preferably use an electrical measurement method because the measurement speed is slow, but the present invention is not limited thereto.

However, when the electrical measurement method is used, two electrodes for measuring the concentration are required, and in the present invention, the probe 602 fixed to the outer lower surface of the basket 102 at a predetermined distance may serve as the two electrodes as described above.

Meanwhile, since the amount of liquid discharged to the outside of the basket 102 during the coffee extraction process is not constant, there may be a problem in that the contact area between the electrode and the liquid is changed from moment to moment, such that the reproducibility of the measurement is removed.

Therefore, according to the present invention, in order to uniformly maintain the liquid contact area of the probe 602, the remaining unit of the probe 602, except for the unit corresponding to the center unit of the outer lower surface of the basket 102, may be subjected to a thick insulation treatment, and thus, when the amount of liquid extracted per hour exceeds a predetermined amount, a constant contact area may be maintained.

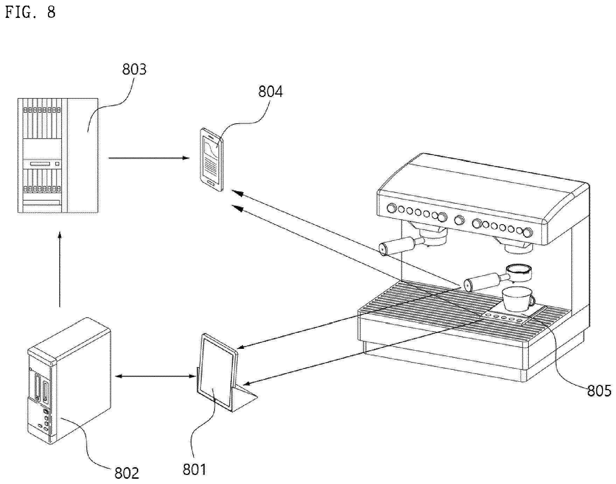

As described above, the temperature sensor 301, the pressure sensor 401, and the concentration sensor 601 are included in and/or outside the basket 102 of the present disclosure, respectively, sensing data measured through the sensors may be transmitted by the communication unit to the external electronic devices 801 to 804 through the network as illustrated in FIG. 8, and the external electronic device may be a concept including the servers 802 and 803.

Meanwhile, referring to FIG. 8, the present invention may further include a measurement sensor 805 for measuring the sugar content, acidity, weight, and the like of a liquid (for example, espresso) drawn to the outside of the basket 102 after water passes through the coffee powder in the basket 102 in the portafilter.

The measurement sensor 805 may be a sensor capable of measuring a hydrogen ion index of a solution of liquid (e.g., espresso) drawn out of the basket 102, that is, PH indicating a hydrogen ion concentration as an index, and in this case, the acidity of the liquid may be measured.

In addition, the measurement sensor 805 may be a sensor for measuring the sugar content of the liquid (e.g., espresso) drawn out of the basket 102, and in this case, the degree of various solutes such as 1 gram (g) of coffee or sugar dissolved in 100 grams (g) of water may be measured based on Brix (or brix percent) indicating 1 gram (g) of solute dissolved in 100 grams (g) of solvent.

The measurement sensor 805 may be a sensor for measuring the amount of a material (e.g., a dissolved solid material) dissolved in a liquid (e.g., an espresso) extracted to the outside of the basket 102, and specifically, may measure the amount of a solid material including mineral components dissolved in water in units of milligram per liter (mg/L), gram per liter (g/L), or the like.

In addition, the measurement sensor 805 may be a sensor for measuring the weight or mass of a liquid (e.g., espresso) drawn out of the basket 102, and may measure the weight or mass in units of grams (g) or kilograms (kg).

Therefore, in the present invention, in the process of extracting coffee, the temperature, pressure, and concentration, which may be referred to as chemical variables (or causal variables), may be measured by the temperature sensor 301, the pressure sensor 401, and the concentration sensor 601 included in the inside and/or the outside of the basket 102, respectively, and furthermore, the measurement sensor 805 outside the basket 102 may measure the sugar content, acidity, and weight, which are physical variables (or resulting variables) that are directly affected by changes in the chemical variables (or causal variables) and have different values, respectively. Thus, according to the present invention, changes/improvements of physical variables (sugar content, acidity, weight and the like) can be achieved by adjusting/controlling chemical variables (temperature, pressure, concentration and the like), and in contrast, adjustment/control levels of chemical variables (temperature, pressure, concentration and the like) can be determined on the basis of the results of the physical variables (sugar content, acidity, weight and the like).

That is, according to the present invention, the chemical variables are measured at the moment when water passes through the coffee powder in the basket 102 within the portafilter, and then the physical variables are measured using the liquid drawn out of the basket 102, and the measured data are accumulated and analyzed to confirm which cause has an effect on the taste and aroma of coffee, and accordingly, it is possible to specifically confirm how much adjustment/control should be performed on which cause for the desired taste and aroma of coffee. Through this, it is possible to improve and maintain the taste and aroma of coffee.

Meanwhile, as illustrated in FIG. 8, the communication unit may transmit sensing data measured through the various sensors described above to the external electronic devices 801 to 804 through the network, and the external electronic device may be a concept including the servers 802 and 803.

The servers 802 and 803 refer to objects that can transmit and receive data to and from at least one other electronic device through a wired/wireless communication network environment, and in the present disclosure, the server may further include an intermediary server and/or a client server in addition to a Database server 802 and a Web Server 803.

Also, the servers 802 and 803 may include, for example, a cloud server, an IP multimedia subsystem (IMS) server, a telephony application server, an instant messaging (IM) server, a media gateway control function (MGCF) server, a messaging gateway (MSG) server, and a call session control function (CSCF) server, and the server may be implemented as a device indicating an object capable of transmitting and receiving data, such as a personal computer (PC), a laptop computer, and a tablet personal computer (PC). The server may further include a database (DB) for storing sensing data collected or transmitted by each of the above-described configurations.

In addition, the external electronic devices 801 to 804 may include a mobile terminal device, a personal computer (PC), a notebook computer, a tablet personal computer (PC), a terminal, a mobile station (MS), a mobile subscriber station (MSS), a subscriber station (SS), an advanced mobile station (AMS), a wireless terminal (WT), a machine-type communication (MTC) device, a machine-to-machine (M2M) device, and a device-to-device (D2D) device.

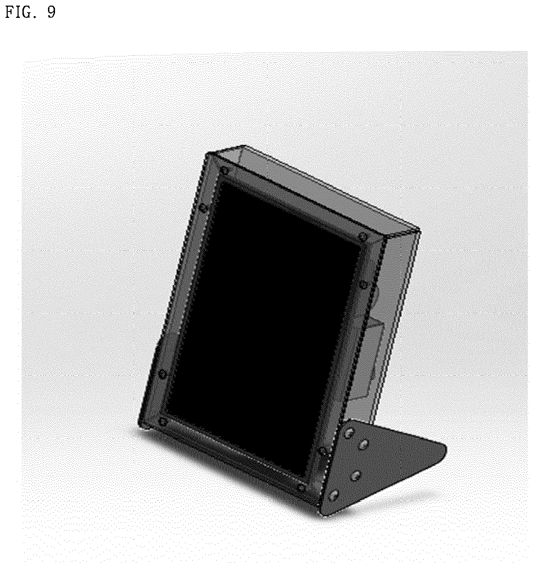

Of course, this is merely an example, and the external electronic devices 801 to 804 according to the present disclosure should be construed as a concept including all devices capable of transmitting and receiving data or signals that are currently developed and commercialized or to be developed in the future as illustrated in FIG. 9 and capable of displaying the transmitted and received signals, in addition to the above-described examples.

In addition, the network means a data communication network for transmitting and receiving various types of data such as text, digital images, digital videos, digital voice information, and the like between the communication unit, the server, and the external electronic device, and the type is not particularly limited.

For example, the network may be an Internet Protocol (IP) network that provides a large-capacity data transmission/reception service through an IP or an All IP network that integrates different IP networks.

Further, the network 300 may be one of a wired network, a wireless broadband (Wibro) network, a mobile communication network including a WCDMA, a mobile communication network including a high speed downlink packet access (HSDPA) network and a long term evolution (LTE) network, a mobile communication network including a LTE advanced (LTE-A), a short-range wireless communication network Bluetooth, a satellite communication network, and a Wi-Fi network, or may be configured by combining at least one of them.

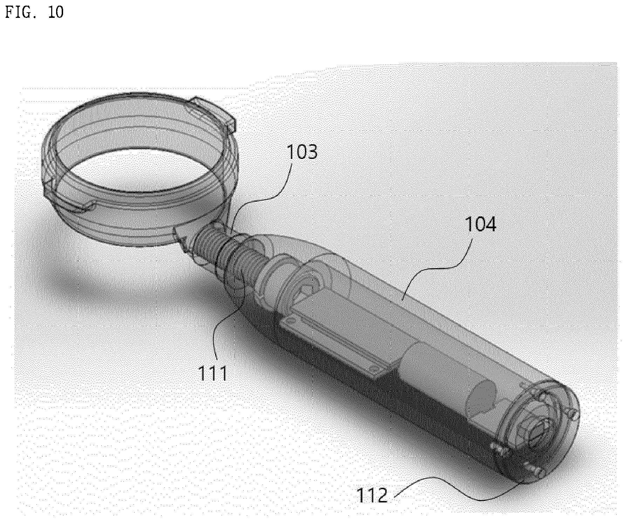

Meanwhile, as described above, the sensing data measured by the temperature sensor, the pressure sensor, and the concentration sensor included in the inside and/or outside of the basket of the portafilter according to the present invention may include a communication unit (Radio Communication unit), a memory unit, a battery unit for supplying power, and a control unit (or a processor, a controller, etc.), which can transmit and receive access information required for wired or wireless access, because the communication unit transmits the sensing data to the external electronic devices 801 to 804 through a network. This will be described later with reference to FIG. 10 to FIG. 11.

Also, an overall process of data communication, such as sensed data processing, layer processing, and the like, may be controlled by a control unit, and a connection relationship may be formed between the memory unit, the communication unit, and the control unit in a wired or wireless manner.

The communication unit may include a transmitter and a receiver, and the transmitter and the receiver may be configured to transmit and receive data or signals to and from at least one external electronic device 801 to 804.

The control unit may be functionally connected to the transmission unit and the reception unit in the communication unit, and accordingly, the transmission unit and the reception unit may be configured to control a process of receiving data or signals with the external electronic devices 801 to 804.

In addition, the control unit may perform various pre-processing on the sensing data to be transmitted and then transmit the pre-processed sensing data to the transmission unit, and may perform post-processing on the data received by the reception unit.

If necessary, the control unit may store information included in the transmitted/received data in the memory unit.

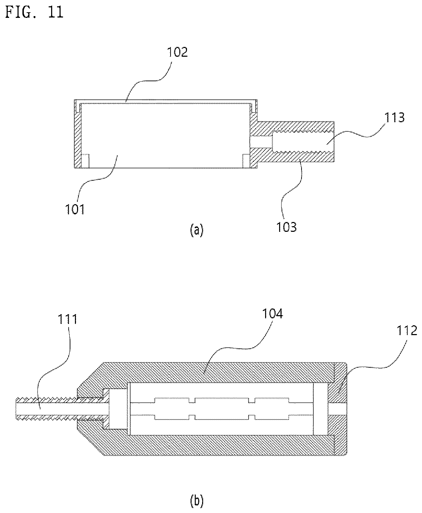

According to an exemplary embodiment of the present invention, the portafilter may include a handle 104 connected to the head through a connection unit, and the handle 104 may have an empty space formed therein as illustrated in FIG. 10 or 11. In addition, according to the present disclosure, the empty space formed in the handle 104 may include all or some of the above-mentioned communication unit, battery unit, memory unit, and control unit.

To this end, one side of the handle 104 may be provided with a bolt 111 to be connected to the head, and the other side may be provided with a lid unit 112 to reach the empty space formed therein, and the lid unit 112 may be formed to be detachable.

Therefore, when the lid unit 112 is removed, the user may approach any one of all or some of the communication unit, the battery unit, the memory unit, and the control unit included in the empty space inside the handle 104, and for example, when the battery constituting the battery unit has reached the end of its lifespan, the replacement of the battery may be directly performed.

Meanwhile, as described above, since the temperature sensor 301, the pressure sensor 401, and the concentration sensor 601 are included inside and/or outside the basket 102 of the present disclosure, respectively, and the communication unit transmits sensing data measured through the sensors to the external electronic devices 801 to 804 through the network, the temperature sensor 301, the pressure sensor 401, and the concentration sensor 601 formed inside and/or outside the basket 102, respectively, need to be connected to at least one of all or some of the communication unit, the battery unit, the memory unit, and the control unit included in the empty space inside the handle 104.

In this case, when the connection is made through the cable, the cable may be disconnected in the process of coupling the basket 102 including the sensor inside and/or outside to the head 101, and furthermore, the cable may be disconnected because continuous shaking or impact is applied to the basket 102 in the process of removing the used coffee powder after the coffee extraction is completed.

As described above, in the present invention, the handle 104 may be coupled to the head 101 through the connection unit 103, and in detail, a bolt 111 (for example, a dish head bolt) may be formed at one side of the handle 104, and a groove 113 that is contrasted with the bolt 111 may be formed at one side of the connection unit 103 of the head 101.

For example, when the bolt 111 is formed at one side of the handle 104, a groove 113, which is contrasted with the bolt 111, may be formed at the center of the connection unit 103 formed to extend from the head 101 in a longitudinal direction, or vice versa.

In this case, the handle 104 and the head 101 may be fixed to each other through the connection unit 103 by rotating the bolt 111 and the groove 113 in a predetermined direction after contacting each other, and the fixing may be released by rotating the bolt in the opposite direction, and in this case, holes may be formed at central units of the groove 113 and the bolt 111, as shown in FIGS. 11(a) and 11(b), respectively, such that the holes may be continuously communicated from the inside of the head 101 to an empty space inside the handle 104 following the connection unit 103.

Therefore, in the present invention, cables respectively connected to the temperature sensor 301, the pressure sensor 401, and the concentration sensor 601, which are formed inside and/or outside the basket 102, may be connected to at least one of all or some of the communication unit, the battery unit, the memory unit, and the control unit, which are included in the empty space inside the handle 104, through a space that starts from the inside of the head 101 and continuously communicates up to the empty space inside the handle 104 following the connection unit 103.

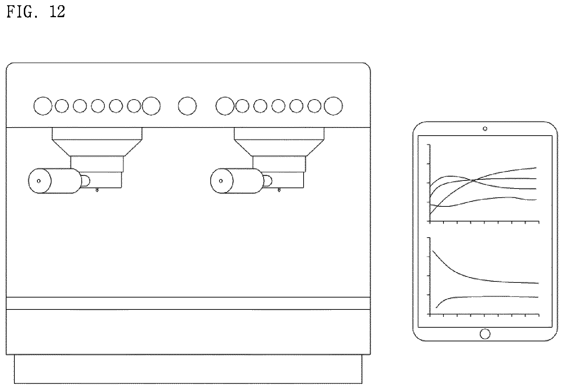

Meanwhile, according to an embodiment of the present disclosure, at least one piece of sensing data sensed through the temperature sensor 301, the pressure sensor 401, and the concentration sensor 601, which are respectively formed inside and/or outside the basket 102, is transmitted to the external electronic devices 801 to 804 through the communication unit, and in this case, the external electronic devices 801 to 804 may display the sensing data on the screen as illustrated in FIG. 12, and the displaying may include displaying at least one piece of sensing data over time.

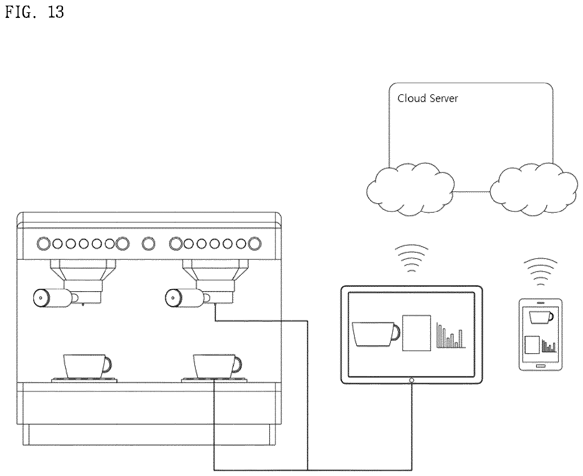

In addition, as illustrated in FIG. 13, the external electronic devices 801 to 804 may build a database by cumulatively storing the at least one sensing data, generate a control command for one or more variables related to coffee extraction based on the at least one sensing data or the cumulatively stored database, generate a signal for controlling various functions of the coffee machine to which the portafilter 100 is coupled, and transmit the generated signal to the coffee machine.

For example, when it is assumed that a temperature of water is 94° C., a pressure is 8.7bar., an extraction time is 28 seconds, an extraction amount is 28 ml, and a concentration is 86%, which are required values of variables for extracting desired coffee, in the case of the present invention, based on at least one sensing data sensed through a temperature sensor, a pressure sensor, and a concentration sensor, which are formed inside and/or outside the basket of the Piltafotter, respectively, a variable required to be controlled is specified, and then a signal for directly controlling the corresponding variable is generated and transmitted to a coffee machine to which the Piltafotter is coupled to perform control, or a guide for controlling the corresponding variable is displayed to a user or a notification is provided so that the user may control/control the coffee machine and the extraction process.

In this case, even a beginner user who does not have the skill in coffee extraction can stop coffee extraction at the most balanced moment, and as a result, coffee having a high quality and a constant taste and aroma can be repeatedly extracted.

Meanwhile, the operation according to the embodiment of the present invention may be implemented as a computer-readable program or code on a computer-readable recording medium. The computer-readable recording medium includes all kinds of recording devices in which data readable by a computer system is stored. In addition, the computer-readable recording medium may be distributed to computer systems connected through a network, and a computer-readable program or code may be stored and executed in a distributed manner.

In addition, the computer-readable recording medium may include a hardware device specially configured to store and execute a program command, such as a ROM, a RAM, a flash memory, or the like. The program instructions may include not only machine code such as that made by a compiler, but also high-level language code that may be executed by a computer using an interpreter.

Some aspects of the invention have been described in the context of a device, but it may also be described according to a corresponding method, where a block or device corresponds to a method step or a feature of a method step. Similarly, aspects described in the context of the method may also be represented by a corresponding block or item or feature of a corresponding apparatus. Some or all of the method steps may be performed by (or using) a hardware device such as, for example, a microprocessor, a programmable computer, or an electronic circuit. In some embodiments, one or more of the most important method steps may be performed by such an apparatus.

In embodiments, a programmable logic device (e.g., a field programmable gate array) may be used to perform some or all of the functionality of the methods described herein. In embodiments, the field programmable gate array may operate with a microprocessor to perform one of the methods described herein. In general, the methods are preferably performed by some hardware device.

Although the above description has been made with reference to the preferred embodiments of the present invention, it will be understood by those skilled in the art that the present invention may be variously modified and changed without departing from the spirit and scope of the present invention described in the following claims.

## Claims

1. A portafilter used for a coffee extraction, the portafilter comprising: a basket having a space of a predetermined size formed therein so as to contain coffee powder and having one or more holes formed on a bottom surface thereof so as to allow water to pass therethrough; a portafilter head capable of accommodating the basket; a communication unit; and a control unit, wherein the pressure sensor measures physical deformation of the outer shape of the basket, which is increased or decreased at the moment water passes through the coffee powder, in the form of quantified data while being attached to the outer surface of the basket, and then measures pressure information applied to the inside of the basket based on the measured quantified data, and the control unit is configured to transmit the pressure information applied to the inside of the basket, measured by the pressure sensor, to an external electronic device through the communication unit.

2. The portafilter according to claim 1, wherein the physical deformation of the outer shape of the basket, which is increased or decreased at the moment the water passes through the coffee powder, includes an influence due to pressure and an influence due to temperature, and wherein the influence due to the temperature is removed when the pressure information applied to the inside of the basket is measured based on the quantified data of the physical deformation.

3. The portafilter according to claim 1, wherein the basket further includes at least one of temperature sensor for measuring a temperature at a moment when water passes through the coffee powder and a concentration sensor for measuring a concentration at a moment when water passes through the coffee powder, and pressure information, temperature information, or concentration information sensed by the pressure sensor, the temperature sensor, or the concentration sensor is transmitted to an external electronic device through the communication unit.

4. The portafilter according to claim 1, further comprising a battery unit and a handle for driving the control unit and the communication unit, wherein the control unit, the communication unit, and the battery unit are positioned in an empty space formed in the handle connected to the portafilter head.

5. The portafilter according to claim 4, further comprising a connection unit extending from one side of the portafilter head in a longitudinal direction, wherein the portafilter head and the handle are connected to each other through the connection unit, and holes are formed at one side of an inner wall surface of the portafilter head, a center unit of the connection unit, and a center unit of one side of the handle, respectively, and the holes communicate with each other.

6. The portafilter according to claim 3, wherein the temperature information, the pressure information, or the concentration information transmitted to the external electronic device is displayed on a screen of the external electronic device, and wherein the display includes a change in the temperature information, the pressure information, or the concentration information over time.

7. The portafilter according to claim 1, wherein the temperature information, the pressure information, or the concentration information transmitted to the external electronic device is stored in the external electronic device to establish a database.

8. A method for controlling a coffee extraction process, the method comprising: generating, by the external electronic device, a guide on the basis of at least one of temperature information, pressure information, or concentration information measured through at least one of a temperature sensor, a pressure sensor, or a concentration sensor included in the portafilter of any one of claims 1 to 7; and displaying the generated guide to a user.

9. The method for controlling the coffee extraction process of claim 8, further comprising: generating, by the external electronic device, a signal for controlling the coffee machine to which the portafilter is coupled, based on at least one of the measured temperature information, pressure information, or concentration information, and transmitting the signal to the coffee machine.

10. A portafilter used for a coffee extraction, the portafilter comprising: a basket having a space of a predetermined size formed therein so as to contain coffee powder and having one or more holes formed on a bottom surface thereof so as to allow water to pass therethrough; a portafilter head capable of accommodating the basket; a communication unit; and a control unit, wherein a probe is formed on an outer bottom surface of the basket, the probe being fixed to at least one end of both ends of the outer bottom surface of the basket and being spaced apart from the outer bottom surface of the basket by a predetermined interval, wherein a concentration sensor for measuring a concentration at a moment when the water passes through the coffee powder and is drawn out of the basket in an electrical measurement scheme is formed on the probe while facing a center of the outer bottom surface of the basket, and wherein the control unit is configured to transmit concentration information of the water at a moment when the water passes through the coffee powder measured through the concentration sensor and is drawn out of the basket to an external electronic device through the communication unit.

11. The portafilter according to claim 10, wherein the probe serves as two electrodes capable of controlling a direction of a current when the concentration sensor measures a concentration of water at a moment when the water is drawn out of the basket in an electrical measurement manner.

12. The portafilter according to claim 10, further comprising: a measuring sensor configured to measure acidity of water discharged to the outside of the basket based on a hydrogen ion concentration.

13. The portafilter according to claim 10, wherein a unit of the probe except for a unit corresponding to a central unit of the outer bottom surface of the basket is treated to be insulated, so that a contact area with water discharged to the outside of the basket is constantly maintained.
